# EUROPEAN PATENT APPLICATION

(11) **EP 4 667 141 A1**
(43) Date of publication of application: **24.12.2025**
(21) Application number: 25180568.5
(22) Date of filing: 03.06.2025
(51) Int. Cl.: B22F 10/28, B22F 10/36, B22F 12/41, B22F 12/90, B29C 64/153, B33Y 10/00, B33Y 50/02

(54) **THREE-DIMENSIONAL POWDER BED FUSION ADDITIVE MANUFACTURING APPARATUS AND METHOD OF CONTROLLING THREE-DIMENSIONAL POWDER BED FUSION ADDITIVE MANUFACTURING APPARATUS**

(30) Priority: 18.06.2024 JP 2024098285
(71) Applicant: Jeol Ltd., Akishima-shi, Tokyo 196-8558 (JP)
(72) Inventor: TSUTAGAWA, Nari, Tokyo 196-8558 (JP); KANEKO, Yuhei, Tokyo 196-8558 (JP); KAWAKAMI, Masahiko, Tokyo 196-8558 (JP); TSUDA, Takashi, Tokyo 196-8558 (JP)
(74) Representative: Boult Wade Tennant LLP

(57) **Abstract**

A three-dimensional powder bed fusion additive manufacturing (PBF-AM) apparatus (1) includes a build plate (22), a powder supply device (16), a beam irradiation device (2), a plurality of detection units (46), and a control unit (104). The control unit (104) controls the irradiation device (2). In addition, when acquiring electrons, the control unit (104) controls the irradiation device (2) in a manner that only a predetermined irradiation range in the powder layer is irradiated with the primary ray.

## Description

### BACKGROUND

### Technical Field

The present invention relates to a three-dimensional powder bed fusion additive manufacturing (PBF-AM) apparatus that manufactures a product by stacking layers in which a powder material is thinly spread on a stage one by one, and a method of controlling the three-dimensional powder bed fusion additive manufacturing apparatus.

### Related Art

In recent years, a three-dimensional PBF-AM technology that manufactures a product by stacking layers in which a powder material is thinly spread one by one has attracted attention, and many types of three-dimensional PBF-AM technologies have been developed depending on different powder materials and different manufacturing methods.

In a manufacturing method using a conventional three-dimensional PBF-AM apparatus, for example, a powder material is spread layer by layer on a base plate installed on the upper surface of a stage. Next, in the powder material spread on the base plate, only the two-dimensional structural portion corresponding to one cross-section of a product is melted by a heating mechanism composed of an electron beam or a laser. Layers of the powder material are then stacked one by one in a height direction (a Z-direction), so that the product is manufactured (see, for example, Patent Literature 1).

Furthermore, Patent Literature 1 describes a technique of providing a detection unit that detects backscattered electrons generated when the powder material is irradiated with an electron beam, and determining the state of the product on the basis of information detected by the detection unit.

### Citation List

### Patent Literature

Patent Literature 1: JP 2021-42410 A

### SUMMARY

However, in the technique described in Patent Literature 1, in order to acquire backscattered electrons, the entire meltable area is irradiated with a primary ray as an electron beam in all the layers during a building step. Therefore, in the technique described in Patent Literature 1, it is necessary to scan the entire meltable area with the primary ray. As a result, there is a problem that it takes time to acquire a backscattered electron image, and the throughput of a manufacturing process is degraded.

In view of the above problem, an object of the present invention is to provide a three-dimensional PBF-AM apparatus and a method of controlling the three-dimensional PBF-AM apparatus capable of improving the throughput of a manufacturing process.

In order to solve the above problems and achieve the object of the present invention, a three-dimensional additive manufacturing (PBF-AM) apparatus according to the present invention is a three-dimensional PBF-AM apparatus that manufactures a product. The three-dimensional PBF-AM apparatus includes a build plate, a powder supply device, an irradiation device, a detection unit, and a control unit. The powder supply device supplies a powder material to the build plate to form a powder layer. The irradiation device irradiates the powder layer with a primary ray. The detection unit detects electrons generated when the powder material is irradiated with the primary ray. The control unit controls the irradiation device. In addition, when acquiring electrons, the control unit controls the irradiation device in a manner that only a predetermined irradiation range in the powder layer is irradiated with the primary ray.

Furthermore, a method of controlling a three-dimensional PBF-AM apparatus according to the present invention is a control method used in the three-dimensional PBF-AM apparatus with the configuration described above. When acquiring electrons, the control unit controls the irradiation device in a manner that only a predetermined irradiation range in the powder layer is irradiated with the primary ray.

According to the three-dimensional PBF-AM apparatus and the method of controlling the three-dimensional PBF-AM apparatus, it is possible to improve the throughput of the manufacturing process.

### BRIEF DESCRIPTION OF DRAWINGS

FIG. 1 is a schematic cross-sectional view schematically illustrating a three-dimensional PBF-AM apparatus according to an embodiment example of the present invention;
FIG. 2 is a block diagram illustrating a configuration example of a control system of the three-dimensional PBF-AM apparatus according to the embodiment example of the present invention;
FIG. 3 is a flowchart illustrating an operation procedure of the three-dimensional PBF-AM apparatus according to the embodiment example of the present invention;
FIG. 4 is a diagram illustrating an example of build data of a product manufactured by the three-dimensional PBF-AM apparatus according to the embodiment example of the present invention;
FIG. 5 shows an image illustrating an example of an irradiation range in a backscattered electron image acquisition process of the three-dimensional PBF-AM apparatus according to the embodiment example of the present invention;
FIG. 6 shows an enlarged image of the irradiation range;
FIG. 7 shows an enlarged image of the irradiation range;
FIG. 8 shows an image illustrating another example of the irradiation range in the backscattered electron image acquisition process of the three-dimensional PBF-AM apparatus according to the embodiment example of the present invention;
FIG. 9 shows an image illustrating still another example of the irradiation range in the backscattered electron image acquisition process of the three-dimensional PBF-AM apparatus according to the embodiment example of the present invention;
FIG. 10 shows an image illustrating yet another example of the irradiation range in the backscattered electron image acquisition process of the three-dimensional PBF-AM apparatus according to the embodiment example of the present invention;
FIG. 11 is a diagram illustrating another example of the build data of the product manufactured by the three-dimensional PBF-AM apparatus according to the embodiment example of the present invention;
FIG. 12 shows an image illustrating further example of the irradiation range in the backscattered electron image acquisition process of the three-dimensional PBF-AM apparatus according to the embodiment example of the present invention;
FIG. 13 is a diagram illustrating still another example of the build data of the product manufactured by the three-dimensional PBF-AM apparatus according to the embodiment example of the present invention;
FIG. 14 is a diagram illustrating yet another example of the build data of the product manufactured by the three-dimensional PBF-AM apparatus according to the embodiment example of the present invention;
FIG. 15 shows an image illustrating still further example of the irradiation range in the backscattered electron image acquisition process of the three-dimensional PBF-AM apparatus according to the embodiment example of the present invention; and
FIG. 16 shows an image illustrating yet further example of the irradiation range in the backscattered electron image acquisition process of the three-dimensional PBF-AM apparatus according to the embodiment example of the present invention.

### DETAILED DESCRIPTION

### 1. Embodiment Example

### 1-1. Configuration of Three-Dimensional PBF-AM Apparatus

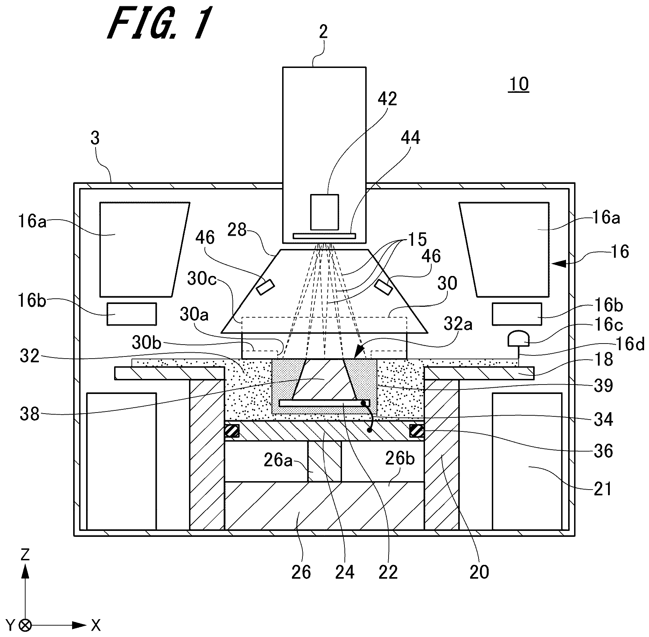

First, an embodiment example of a three-dimensional PBF-AM apparatus according to an embodiment example of the present invention (hereinafter, referred to as "the present example") will be described with reference to FIG. 1.

FIG. 1 is a schematic cross-sectional view schematically illustrating the three-dimensional PBF-AM apparatus of the present example. In the following description, in order to clarify the shape, positional relationship, and the like of each part of the three-dimensional PBF-AM apparatus, the horizontal direction in FIG. 1 is referred to as an X direction, the depth direction in FIG. 1 is referred to as a Y direction, and the vertical direction in FIG. 1 is referred to as a Z direction. The X direction, the Y direction, and the Z direction are directions orthogonal to each other. The X direction and the Y direction are parallel to the horizontal direction, and the Z direction is parallel to the vertical direction.

A three-dimensional PBF-AM apparatus 1 illustrated in FIG. 1 is, for example, an apparatus that irradiates a powder material made of metal powder such as titanium with an electron beam to melt the powder material and stacks layers in which the powder material is solidified, thereby manufacturing a three-dimensional product.

As illustrated in FIG. 1, the three-dimensional PBF-AM apparatus 1 includes a vacuum chamber 3, a beam irradiation device 2, a powder supply device 16, a build table 18, a build box 20, and a collecting box 21. The three-dimensional PBF-AM apparatus 1 also includes a build plate 22, an inner base 24, a plate moving device 26, a radiation shield cover 28, an electron shield 30, a camera 42, and a shutter 44. Furthermore, the three-dimensional PBF-AM apparatus 1 includes a plurality of detection units 46 that detect backscattered electrons, which are an example of electrons.

The vacuum chamber 3 is a chamber for creating a vacuum state by evacuating air in the chamber using a vacuum pump (not illustrated).

The beam irradiation device 2 is a device that irradiates the build plate 22 or a build surface 32a of a powder layer made of a powder material 32 with electron beams 15. The build surface 32a corresponds to the upper surface of the powder layer. The state of the powder layer changes as the three-dimensional PBF-AM process proceeds. Although not illustrated, the beam irradiation device 2 includes an electron gun that is the generation source of the electron beams 15, a focusing lens that focuses the electron beams generated by the electron gun, and a deflection lens that deflects the electron beams 15 focused by the focusing lens. The focusing lens is configured using a focusing coil, and focuses the electron beams 15 by a magnetic field generated by the focusing coil. The deflection lens is configured using a deflection coil, and deflects the electron beams 15 by a magnetic field generated by the deflection coil.

The powder supply device 16 is a device that supplies the powder material 32, which is an example of the powder material as the raw material of a product 38, onto the build plate 22 to form a powder layer. The powder supply device 16 includes a hopper 16a, a powder dropping device 16b, and a squeegee 16c. The hopper 16a is a chamber for storing metal powder. The powder dropping device 16b is a device that drops the powder material 32 stored in the hopper 16a onto the build table 18. The squeegee 16c is an elongated member long in the Y direction, and includes a blade 16d for spreading powder. The squeegee 16c spreads the powder material 32 dropped by the powder dropping device 16b on the build table 18. The squeegee 16c is provided to be movable in the X direction in order to spread the powder material 32 over the entire surface of the build table 18.

The build table 18 is horizontally disposed inside the vacuum chamber 3. The build table 18 is disposed below the powder supply device 16. The central portion of the build table 18 is opened. The opening shape of the build table 18 is a circle in plan view or a square in plan view (for example, a quadrangle in plan view).

The build box 20 is a box that forms a building space. The upper end portion of the build box 20 is connected to the opening edge of the build table 18. The lower end portion of the build box 20 is connected to the bottom wall of the vacuum chamber 3.

The collecting box 21 is a box that collects the powder material 32 supplied more than necessary among the powder material 32 supplied onto the build table 18 by the powder supply device 16.

The build plate 22 is a plate for forming the product 38 using the powder material 32. The product 38 is formed by being stacked on the build plate 22. The build plate 22 is formed in a circular shape in plan view or a square shape in plan view based on the opening shape of the build table 18. The build plate 22 is connected (grounded) to the inner base 24 by a ground wire 34 so as not to be in an electrically floating state. The inner base 24 is maintained at a ground (GND) potential. The powder material 32 is spread on the build plate 22 and the inner base 24.

The inner base 24 is provided to be movable in the vertical direction (Z direction). The build plate 22 moves in the vertical direction integrally with the inner base 24. The inner base 24 has a larger outer dimension than the build plate 22. The inner base 24 slides in the vertical direction along the inner side surface of the build box 20. A seal member 36 is attached to the outer peripheral portion of the inner base 24. The seal member 36 is a member that maintains slidability and sealability between the outer peripheral portion of the inner base 24 and the inner side surface of the build box 20. The seal member 36 is made of a material having heat resistance and elasticity.

The plate moving device 26 is a device that moves the build plate 22 and the inner base 24 in the vertical direction. The plate moving device 26 includes a shaft 26a and a drive mechanism unit 26b. The shaft 26a is connected to the lower surface of the inner base 24. The drive mechanism unit 26b includes a motor and a power transmission mechanism (both not illustrated), and drives the power transmission mechanism using the motor as a drive source to move the build plate 22 and the inner base 24 integrally with the shaft 26a in the vertical direction. The power transmission mechanism includes, for example, a rack and pinion mechanism, a ball screw mechanism, or the like.

The radiation shield cover 28 is disposed between the build plate 22 and the beam irradiation device 2 in the Z direction. The radiation shield cover 28 is made of metal such as stainless steel. The radiation shield cover 28 shields radiant heat generated when the powder material 32 is irradiated with the electron beam 15 by the beam irradiation device 2. When the powder material 32 is irradiated with the electron beam 15 in order to perform sintering of the powder material 32, the powder material 32 is melted. At this time, when heat radiated from the build surface 32a of the powder layer, that is, radiant heat is widely diffused into the vacuum chamber 3, thermal efficiency is degraded. On the other hand, in a case where the radiation shield cover 28 is disposed above the build plate 22, heat radiated from the build surface 32a is shielded by the radiation shield cover 28, and the shielded heat is reflected by the radiation shield cover 28 and returned to the build plate 22 side. Therefore, heat generated by the irradiation of the electron beam 15 can be efficiently used.

In addition, the radiation shield cover 28 performs a function of suppressing adhesion (vapor deposition) of an evaporated substance generated when the powder material 32 is irradiated with the electron beam 15 to the inner wall of the vacuum chamber 3. When the powder material 32 is irradiated with the electron beam 15, a part of the melted metal becomes an atomized evaporated substance and rises from the build surface 32a. The radiation shield cover 28 is disposed so as to cover the space above the build surface 32a so that the evaporated substance does not diffuse into the vacuum chamber 3.

The electron shield 30 has an opening 30a and a shield portion 30b. In forming the product 38, the electron shield 30 is disposed to cover the upper surface of the powder material 32, that is, the build surface 32a. At this time, the opening 30a exposes the powder material 32 spread on the build plate 22, and the shield portion 30b shields the powder material 32 located outside the opening 30a. The shape of the opening 30a is set based on the shape of the build plate 22. For example, when the build plate 22 is circular in plan view, the shape in plan view of the opening 30a is set to be circular accordingly, and when the build plate 22 is square in plan view, the shape in plan view of the opening 30a is set to be square accordingly.

The electron shield 30 is disposed below the radiation shield cover 28. The opening 30a and the shield portion 30b of the electron shield 30 are arranged between the build plate 22 and the radiation shield cover 28 in the Z direction. The electron shield 30 includes an enclosure portion 30c. The enclosure portion 30c is disposed so as to enclose the space above the opening 30a. A part (upper portion) of the enclosure portion 30c overlaps the radiation shield cover 28 in the Z direction. The enclosure portion 30c performs a function of shielding radiant heat generated from the build surface 32a and a function of suppressing diffusion of an evaporated substance generated from the build surface 32a. That is, the enclosure portion 30c performs similar functions to the radiation shield cover 28.

The electron shield 30 is made of metal having a melting point higher than that of the powder material 32 used as the raw material of the product 38. The electron shield 30 is made of a material having low reactivity with the powder material 32. Examples of a constituent material of the electron shield 30 include titanium. In addition, the electron shield 30 may be made of metal of the same material as the powder material 32 to be used. The electron shield 30 is electrically grounded to GND. The electron shield 30 performs an electrical shielding function in a case where the powder material 32 is presintered by irradiation with the electron beam 15 in a preheating step before the sintering step to be described later, thereby minimizing the occurrence of powder scattering.

The camera 42 is a camera capable of capturing the build surface 32a of the powder layer. The camera 42 is disposed to be shifted in position in the Y direction from the beam irradiation device 2 so as not to interfere with the beam irradiation device 2 in position. The camera 42 is preferably a visible light camera such as a digital video camera. The camera 42 captures the build surface 32a of the powder layer, thereby generating an image (image data) of the powder layer. Therefore, the image generated by the camera 42 is an image indicating the state of the build surface 32a of the powder layer. Capturing with the camera 42 is performed in a state where illumination light emitted from an illumination light source (not illustrated) included in the three-dimensional PBF-AM apparatus 1 is applied to the build surface 32a of the powder layer.

The shutter 44 protects the camera 42 and an observation window so that the evaporated substance generated from the build surface 32a when the powder material 32 is melted by the irradiation with the electron beam 15 does not adhere to the camera 42 and the observation window. Capturing of the build surface 32a by the camera 42 is performed in a state where the shutter 44 is opened. In addition, in a step in which the evaporated substance is likely to be generated or a step in which the amount of the evaporated substance generated is large, that is, when the powder material 32 is melted by the electron beam 15, the step is performed in a state where the shutter 44 is closed.

The plurality of detection units 46 that detect backscattered electrons are arranged below the beam irradiation device 2.

Specifically, the detection unit 46 is disposed between the beam irradiation device 2 and the build surface 32a of the product 38 formed on the build plate 22. The position where the detection unit 46 is provided is not limited to the example illustrated in FIG. 1, and the detection unit 46 may be disposed at other various positions.

### 1-2. Control System of Three-Dimensional PBF-AM Apparatus

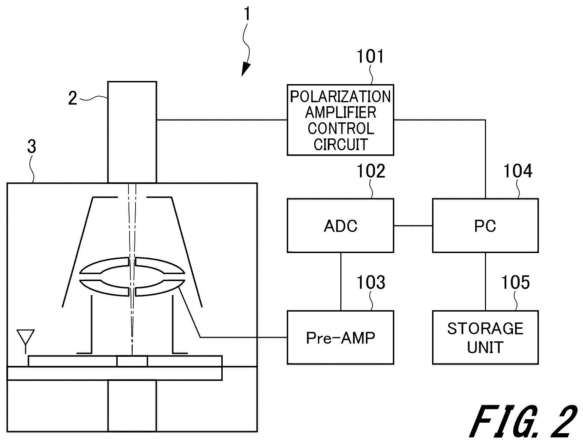

Next, the configuration of a control system of the three-dimensional PBF-AM apparatus 1 will be described with reference to FIG. 2.

FIG. 2 is a block diagram illustrating a configuration example of the control system of the three-dimensional PBF-AM apparatus 1 according to the present example.

As illustrated in FIG. 2, the three-dimensional PBF-AM apparatus 1 includes a polarization amplifier control circuit 101 indicating an electron beam control unit, an analog-digital conversion circuit (ADC) 102, a preamplifier (Pre-AMP) 103, a personal computer (PC) 104 indicating an example of a control unit, and a storage unit 105.

The polarization amplifier control circuit 101 is connected to the beam irradiation device 2 and the PC 104. The PC 104 transmits a control signal to the polarization amplifier control circuit 101 on the basis of beam scanning information stored in the storage unit 105. The polarization amplifier control circuit 101 controls the beam irradiation device 2 on the basis of the control signal. As a result, the beam irradiation device 2 irradiates a predetermined position with the electron beam 15. In addition, the polarization amplifier control circuit 101 transmits beam irradiation position information indicating the irradiation position of the electron beam 15 to the PC 104.

The Pre-AMP 103 is connected to the detection unit 46 and the ADC 102. The Pre-AMP 103 then converts the backscattered electron current detected by the detection unit 46 from a current signal to a voltage signal. The voltage signal converted by the Pre-AMP 103 is transmitted to the ADC 102. The ADC 102 converts the backscattered electron signal, which is a voltage signal, from an analog signal to a digital signal and transmits the digital signal to the PC 104.

In addition, the PC 104 includes an image processing unit (not illustrated). The image processing unit of the PC 104 captures an image generated by the camera 42 and performs predetermined image processing on the captured image. The PC 104 outputs the camera image subjected to the image processing by the image processing unit to a display unit (not illustrated).

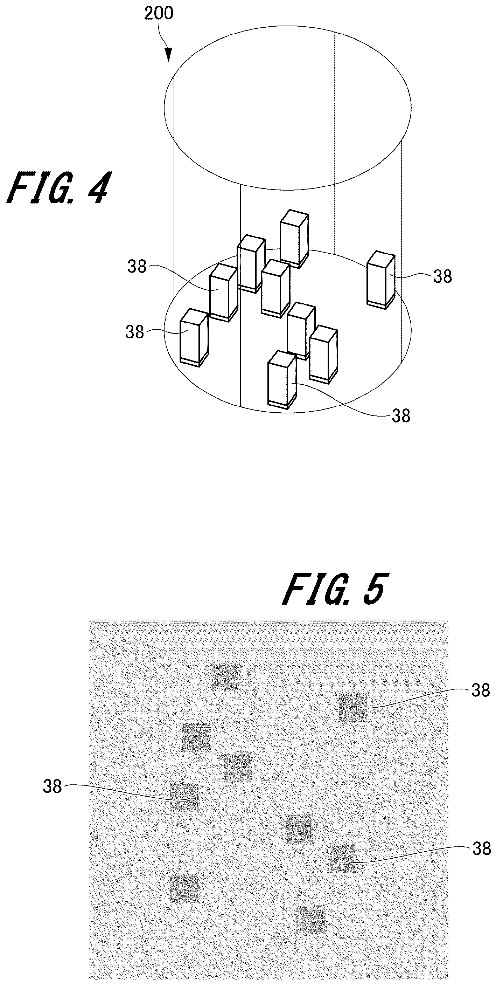

The storage unit 105 stores build data 200 (see FIG. 4). The PC 104 creates beam scanning information on the basis of the build data 200, and stores the created beam scanning information in the storage unit 105. Although the example of creating the beam scanning information by the PC 104 has been described, it is not limited thereto, and the user may create the beam scanning information on the basis of the build data 200 and store the beam scanning information in the storage unit 105.

### 1-3. Operation example of Three-Dimensional PBF-AM Apparatus

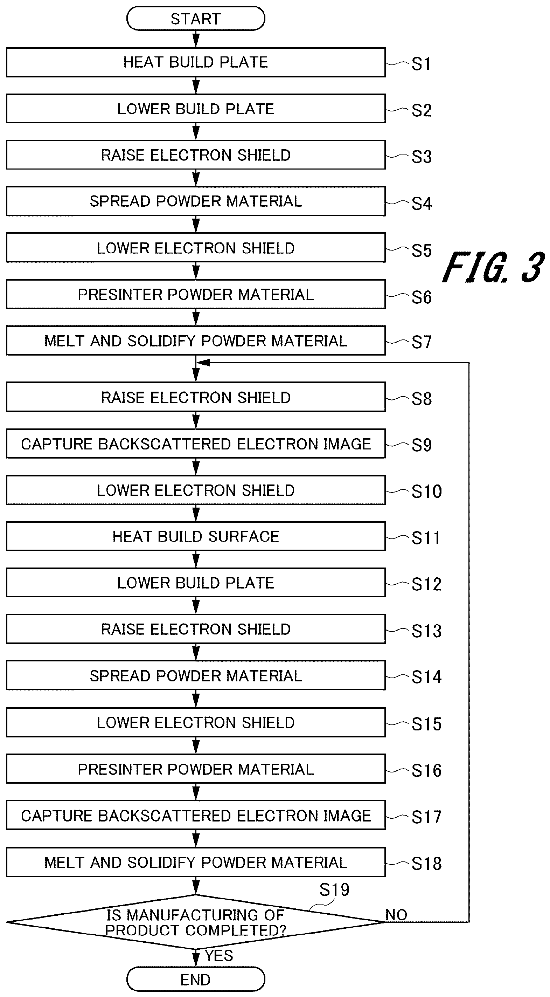

Next, an operation example of the three-dimensional PBF-AM apparatus 1 with the configuration described above will be described with reference to FIG. 3.

FIG. 3 is a flowchart illustrating an operation example of the three-dimensional PBF-AM apparatus 1.

As illustrated in FIG. 3, the polarization amplifier control circuit 101 controls the beam irradiation device 2 on the basis of a control signal from the PC 104. The beam irradiation device 2 operates on the basis of a control command given from the polarization amplifier control circuit 101 to heat the build plate 22 (step S1). In step S1, the beam irradiation device 2 operates under the control of the polarization amplifier control circuit 101 to irradiate the build plate 22 with the electron beam 15 through the opening 30a of the electron shield 30. At this time, the polarization amplifier control circuit 101 defocuses the electron beam 15 by an objective lens or the like included in the beam irradiation device 2.

Defocusing is performed in a manner that the in-focus position of the electron beam 15 is shifted downward from the upper surface of the build plate 22, that is, in an underfocused state.

In addition, the polarization amplifier control circuit 101 controls the beam irradiation device 2 so as to scan the electron beam 15 over a wider range than the opening 30a of the electron shield 30. The build plate 22 is thus heated by irradiation with the electron beam 15. The build plate 22 is heated to a temperature at which the powder material 32 is presintered. After heating the build plate 22 to a predetermined temperature, the beam irradiation device 2 stops the irradiation with the electron beam 15. Scanning the electron beam 15 over a wider range than the opening 30a of the electron shield 30 means scanning the electron beam 15 over an area larger than the opening area of the opening 30a so that the opening 30a falls within the scanning range (scanning area) of the electron beam 15. The scanning range (scanning area) of the electron beam 15 in the beam irradiation device 2 may be narrower than the opening 30a of the electron shield 30.

Next, the build plate 22 is lowered by a predetermined amount (step S2). In step S2, the plate moving device 26 lowers the inner base 24 by a predetermined amount so that the upper surface of the build plate 22 is slightly lower than the upper surface of the powder material 32 spread on the build table 18. At this time, the build plate 22 is lowered by the predetermined amount together with the inner base 24. The predetermined amount (hereinafter, also referred to as "ΔZ") described herein corresponds to the thickness of one layer when the product 38 is manufactured by stacking.

Next, the electron shield 30 is raised (step S3). In step S3, for example, the squeegee 16c is moved in the X direction, and a cam follower (not illustrated) is brought into contact with the inclined surface of an elevating member provided in the electron shield 30. As a result, the electron shield 30 rises along the Z direction.

Next, the powder material 32 is spread on the build plate 22 (step S4). In step S4, the powder supply device 16 drops the powder material 32 supplied from the hopper 16a to the powder dropping device 16b onto the build table 18 by the powder dropping device 16b. Thereafter, the powder supply device 16 moves the squeegee 16c from one end side to the other end side in the X direction. As a result, the powder material 32 is spread on the inner base 24. At this time, the powder material 32 is spread on the build table 18 with a thickness corresponding to ΔZ. The excess powder material 32 is collected in the collecting box 21.

Next, the electron shield 30 is lowered (step S5). In step S5, the squeegee 16c is moved to a position where the cam follower of the squeegee 16c does not come into contact with the elevating member. As a result, the electron shield 30 is lowered to the upper surface of the build plate 22. At this time, the powder material 32 spread on the build plate 22 is exposed to the outside through the opening 30a of the electron shield 30. The powder material 32 around the build plate 22 is in a state of being covered by the shield portion 30b of the electron shield 30.

Next, the powder material 32 is presintered (step S6). In step S6, the polarization amplifier control circuit 101 controls the beam irradiation device 2 on the basis of a control signal from the PC 104. The powder material 32 on the build plate 22 is thus irradiated with the electron beam 15 through the opening 30a of the electron shield 30. At this time, the polarization amplifier control circuit 101 defocuses the electron beam 15 by an objective lens or the like included in the beam irradiation device 2. Defocusing is performed in a manner that the in-focus position of the electron beam 15 is shifted downward from the upper surface (build surface 32a) of the powder material 32, that is, in an underfocused state. In addition, the polarization amplifier control circuit 101 controls the beam irradiation device 2 so as to scan the electron beam 15 over a wider range than the opening 30a of the electron shield 30. As a result, not only the powder material 32 exposed at the opening 30a but also the powder material 32 located outside the opening 30a (the powder material 32 shielded by the shield portion 30b) is presintered.

As described above, the step of covering the powder material 32 spread on the build plate 22 by the electron shield 30 having the opening 30a and irradiating the powder material 32 with the electron beam 15 through the opening 30a to presinter the powder material 32 corresponds to a first step.

In the first step, by scanning the electron beam 15 over a wider range than the opening 30a of the electron shield 30, it is possible to presinter at least all the powder material 32 exposed at the opening 30a. When the powder material 32 is presintered, the powder material 32 can have conductivity. Therefore, powder scattering in the sintering step performed after the preheating step can be suppressed.

Next, the powder material 32 is melted and solidified (step S7). In step S7, the powder material 32 as a presintered body is sintered by melting and solidifying the powder material 32 presintered as described above by irradiation with the electron beam 15. This step corresponds to a second step. In the second step, the beam irradiation device 2 scans the electron beam 15 on the basis of two-dimensional data obtained by slicing the build data 200 of the target product 38, that is, three-dimensional Computer-Aided Design (CAD) data with a constant thickness, thereby selectively melting the powder material 32 on the build plate 22. The powder material 32 melted by the irradiation with the electron beam 15 solidifies after the electron beam passes. As a result, building of a first layer is completed. The second step corresponds to a selective melting step since the powder material 32 spread on the build plate 22 is selectively melted and solidified by scanning of the electron beam 15.

Next, the electron shield 30 is raised (step S8). Next, a backscattered electron image is acquired (step S9). In step S9, the polarization amplifier control circuit 101 first controls the beam irradiation device 2 on the basis of a control signal from the PC 104. As a result, the beam irradiation device 2 operates on the basis of a control command given from the polarization amplifier control circuit 101, thereby scanning a presintered area 39 where the presintered powder material 32 is present and the product 38 with the electron beam 15. At this time, the beam irradiation device 2 reduces the electron beam current of the electron beam 15 as much as possible, and irradiates the build surface 32a in focus. The detection unit 46 then detects backscattered electrons generated by the electron beam 15.

The detection unit 46 outputs the detected backscattered electron signal to the PC 104 via the Pre-AMP 103. The image processing unit of the PC 104 then performs arithmetic processing on the backscattered electron signal (backscattered electron information) acquired from the detection unit 46 to acquire a backscattered electron image (BSE image). In addition, the image processing unit stores the acquired BSE image in the storage unit 105.

Before performing the process of step S9, the PC 104 sets the irradiation range of the electron beam 15 on the basis of the build data 200 stored in the storage unit 105. Then, in the process of step S9, the PC 104 outputs a control signal to the polarization amplifier control circuit 101 on the basis of the set irradiation range. As a result, the polarization amplifier control circuit 101 controls the beam irradiation device 2 so as to irradiate the predetermined irradiation range with the electron beam 15.

An example of the irradiation range of the electron beam 15 in the process of step S9 or step S17 to be described later will be described later.

Next, the electron shield 30 is lowered (step S10), and the build surface 32a is heated as a preparation for spreading the powder material 32 (step S11). In step S11, the polarization amplifier control circuit 101 controls the beam irradiation device 2 on the basis of a control signal from the PC 104. As a result, the beam irradiation device 2 operates on the basis of a control command given from the polarization amplifier control circuit 101 to irradiate the build surface 32a with the electron beam 15 through the opening 30a of the electron shield 30. At this time, the polarization amplifier control circuit 101 defocuses the electron beam 15 by an objective lens or the like included in the beam irradiation device 2. Defocusing is performed in a manner that the in-focus position of the electron beam 15 is shifted downward from the build surface 32a, that is, in an underfocused state.

In addition, the polarization amplifier control circuit 101 controls the beam irradiation device 2 so as to scan the electron beam 15 over a wider range than the opening 30a of the electron shield 30. As a result, the entire area of the build surface 32a exposed at the opening 30a is irradiated with the electron beam 15. The build surface 32a is heated to a temperature at which the powder material 32 is presintered. After heating the build surface 32a to a predetermined temperature, the beam irradiation device 2 stops the irradiation with the electron beam 15.

Next, the build plate 22 is lowered by the predetermined amount (ΔZ) (step S12). In step S12, the plate moving device 26 lowers the inner base 24 by ΔZ so that the build surface 32a is slightly lower than the upper surface of the powder material 32 spread on the build table 18.

Next, the electron shield 30 is raised (step S13), and the powder material 32 is spread on the build plate 22 (step S14). In step S14, the powder supply device 16 operates similarly to step S4 described above.

Next, the electron shield 30 is lowered (step S15), and the powder material 32 is presintered (step S16). This step corresponds to the first step. In step S16, the beam irradiation device 2 operates similarly to step S6 described above.

When the step of presintering the powder material 32 is completed in the process of step S16, a backscattered electron image is acquired (step S17). In the process of step S17, similarly to the process of step S9, the polarization amplifier control circuit 101 controls the beam irradiation device 2 and acquires the backscattered electron image (BSE image) by the detection unit 46. In the process of step S17, a backscattered electron image of a presintered body is acquired. The step of raising the electron shield 30 is performed before the step of step S17, and the step of lowering the electron shield 30 is performed after the step of step S17.

Next, the powder material 32 is melted and solidified (step S18). This step corresponds to the second step. In step S18, the beam irradiation device 2 operates similarly to S7 described above. As a result, building of the second layer is completed.

Thereafter, the steps of steps S8 to S18 are repeated until manufacturing of the product 38 is completed in step S19. Manufacturing of the product 38 is completed when the powder material 32 is melted and solidified by the number of layers necessary for manufacturing the product 38. As a result, the target product 38 is obtained.

In the operation example described above, the operation of acquiring the BSE image is performed after the sintering step in step S7 and after the process in step S11, but the timing of performing the operation of acquiring the BSE image is not limited thereto. For example, the operation of acquiring the BSE image may be performed after the presintering step in step S6.

### 2. Irradiation Range When Acquiring Backscattered Electron Image

Next, the irradiation range of the electron beam 15 when the backscattered electron image (BSE image) is acquired in the processes in step S9 and step S17 described above will be described with reference to FIGS. 4 to 16.

FIG. 4 is a diagram illustrating an example of the build data 200 of the product 38 manufactured by the three-dimensional PBF-AM apparatus 1 described above.

The build data 200 illustrated in FIG. 4 is stored in the storage unit 105 in advance. The PC 104 outputs a control signal to the polarization amplifier control circuit 101 on the basis of the build data 200. The polarization amplifier control circuit 101 controls the beam irradiation device 2 on the basis of the control signal from the PC 104, and irradiates the powder material 32 with the electron beam 15.

Before outputting the control signal to the polarization amplifier control circuit 101, the PC 104 recognizes the size in the vicinity of the product 38, the shape and coordinates of the product 38, and the like (hereinafter, referred to as "product information") from the build data 200. The PC 104 then determines the irradiation range of the electron beam 15 in the processes in steps S9 and S17 described above, that is, the backscattered electron image acquisition process on the basis of the recognized product information.

FIG. 5 shows an image illustrating an example of the irradiation range of the electron beam 15 in the backscattered electron image acquisition process.

As illustrated in FIG. 5, the PC 104 sets the irradiation range of the electron beam 15 to only the product 38 and the periphery of the product 38, that is, the vicinity of the product 38. Hereinafter, the irradiation range composed of only the product 38 and the vicinity of the product 38 illustrated in FIG. 5 is referred to as a specific scan. That is, when acquiring a backscattered electron image, the PC 104 sets only the important area as the irradiation range of the electron beam 15. As a result, when the backscattered electron image is acquired, it is possible to prevent an unimportant portion from being irradiated with the electron beam 15.

Therefore, as compared with the case of irradiating the entire build surface 32a with the electron beam 15 as in the conventional technique, the irradiation range of the electron beam 15 can be reduced, and the time required for the process of acquiring the backscattered electron image can be shortened. As a result, it is possible to shorten the throughput of the manufacturing process in the three-dimensional PBF-AM apparatus 1. Furthermore, since the time required to acquire the backscattered electron image can be shortened, the image resolution can be enhanced.

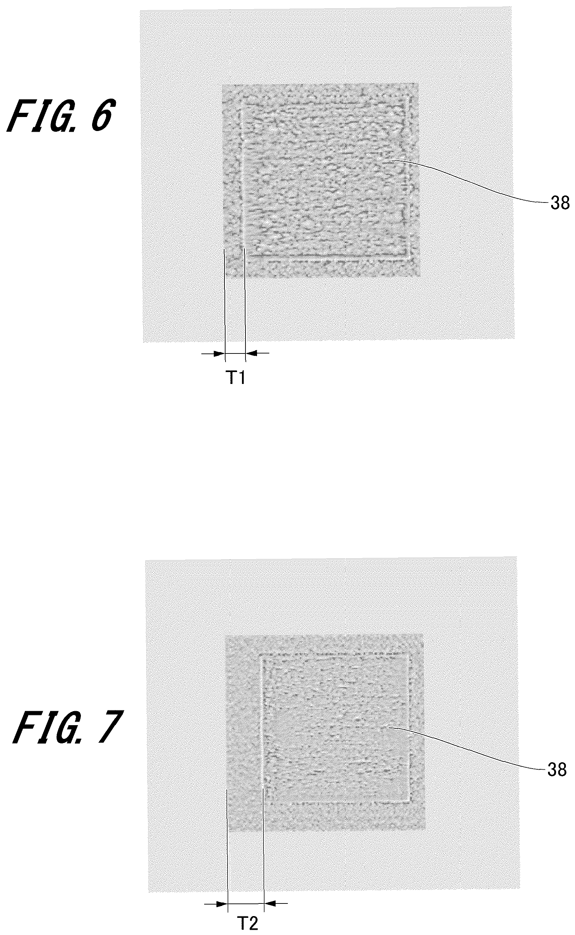

FIGS. 6 and 7 show enlarged images of the irradiation range of the electron beam 15.

As illustrated in FIGS. 6 and 7, when setting the irradiation range of the electron beam 15, the PC 104 also sets the lengths of margins T1 and T2, which are predetermined length ranges from the outer edge of the product 38.

The length of the margin T1 in the irradiation range illustrated in FIG. 6 is set shorter than the length of the margin T2 illustrated in FIG. 7.

As illustrated in FIGS. 6 and 7, by setting not only the product 38 but also the predetermined margins T1 and T2 around the product 38 as the irradiation range, the state of the powder material 32 (powder bed) near the boundary with the product 38 can be known. The powder bed near the boundary of the product 38 largely affects the recoating of the powder material 32 in a sintering area (melt area). Therefore, in a case where a problem occurs in this recoating, information of the state of the powder bed near the boundary of the product 38 is important.

During manufacturing, the vicinity of the sintering area is in a high temperature state. For example, in a case where Ti64 is used as the powder material 32, the temperature reaches about 700 to 800°C on average. For this reason, the vicinity of the sintering area is affected by the thermal expansion of the powder material 32. Due to the influence of this thermal expansion, the sintering area of the actual product 38 and the scan area may not match each other. In order to handle such an influence of thermal expansion, as illustrated in FIGS. 6 and 7, it is effective to include the margins T1 and T2 around the product 38 as well as the product 38 as the irradiation range of the electron beam 15.

The lengths of the margins T1 and T2 around the product 38 may be set by the PC 104 on the basis of the product information, or may be arbitrarily set by the user.

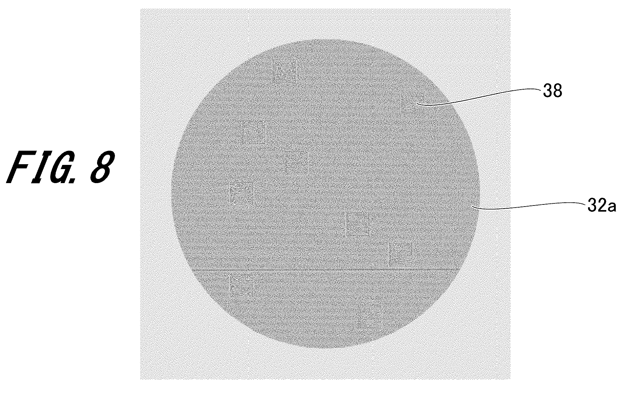

FIG. 8 shows an image illustrating another example of the irradiation range of the electron beam 15 in the backscattered electron image acquisition process.

Furthermore, when setting the irradiation range of the electron beam 15, as illustrated in FIG. 8, the PC 104 may set the entire build surface 32a (entire meltable area) including the product 38 as the irradiation range of the electron beam 15 in a predetermined layer when manufacturing the product 38. The PC 104 then sets a layer to be subjected to the specific scan illustrated in FIG. 5 and a layer in which the entire build surface 32a illustrated in FIG. 8 is set as the irradiation range (hereinafter, referred to as "full scan").

As illustrated in FIG. 8, in the case of the full scan, the time required to acquire the backscattered electron image is long, but the state of the powder bed can be checked. In a case where the state of the powder bed is checked in the range of a certain layer during manufacturing, the full scan is set only in the range of the layer to be checked as illustrated in FIG. 8. In other layers, as illustrated in FIG. 5, the specific scan is set. That is, the PC 104 selects the full scan and the specific scan depending on the layer in which the backscattered electron image is acquired, and sets the irradiation range. As a result, when manufacturing the entire product 38, the total time required to acquire the backscattered electron image can be shortened as much as possible, and the state of the powder bed can also be checked in a predetermined layer.

Which layer among all the layers is to be subjected to the full scan or the specific scan may be set by the PC 104 on the basis of the product information, or may be arbitrarily set by the user.

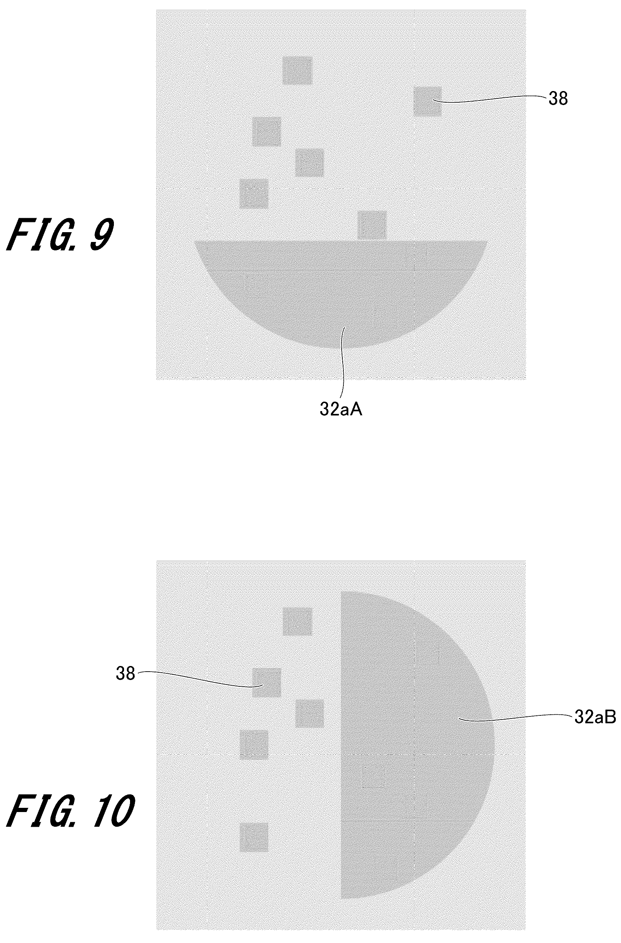

FIGS. 9 and 10 show images illustrating still another example of the irradiation range of the electron beam 15 in the backscattered electron image acquisition process.

When setting the irradiation range of the electron beam 15, in a predetermined layer when manufacturing the product 38, as illustrated in FIGS. 9 and 10, the PC 104 sets the specific scan and sets some selected areas 32aA and 32aB of the entire build surface 32a as the irradiation range (hereinafter, referred to as "partial scan"). In the example illustrated in FIG. 9, the lower half of the drawing is the selected area 32aA, and in the example illustrated in FIG. 10, the right half of the drawing is the selected area 32aB.

The PC 104 then selects the specific scan and the partial scan depending on the layer, and sets the irradiation range. As a result, when manufacturing the entire product 38, the total time required to acquire the backscattered electron image can be shortened as much as possible, and the state of the powder bed in a predetermined area (areas 32aA and 32aB) can also be checked in a predetermined layer.

Which layer among all the layers is to be subjected to the partial scan or the specific scan may be set by the PC 104 on the basis of the product information, or may be arbitrarily set by the user.

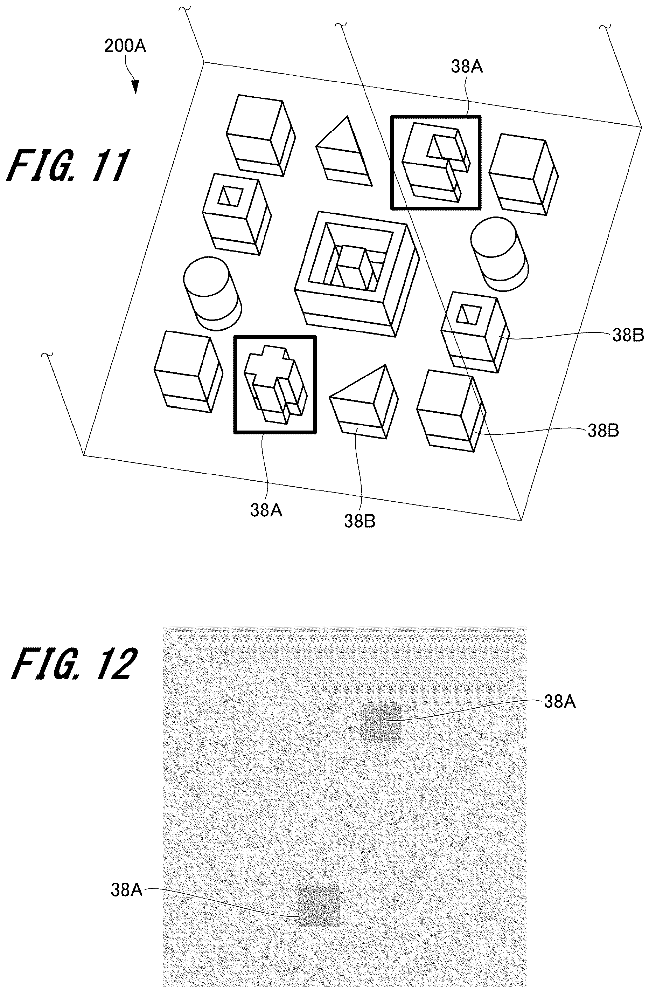

FIG. 11 is a diagram illustrating another example of build data 200A of the product 38 manufactured by the three-dimensional PBF-AM apparatus 1 described above. FIG. 12 shows an image illustrating further example of the irradiation range of the electron beam 15 in the backscattered electron image acquisition process.

As illustrated in FIG. 11, the build data 200A includes a plurality of products 38A and 38B having different shapes and sizes. When setting the irradiation range of the electron beam 15, in a predetermined layer, only the predetermined product 38A and the vicinity of the product 38A among the plurality of products 38A and 38B are set as the irradiation range, as illustrated in FIG. 12. The remaining products 38B among the plurality of products 38B are not set as the irradiation range. Hereinafter, the irradiation range illustrated in FIG. 12 is referred to as a selective scan. In the layers other than the predetermined layer, the specific scan illustrated in FIG. 5 in which all the products 38A and 38B are set as the irradiation range is set.

In the above example, the example in which the selective scan is set in the predetermined layer has been described, but the selective scan may be set in all the layers. In addition, if not necessary in a certain layer, the entire surface does not need to be scanned.

Here, for the known product 38B that has already been manufactured several times, it may not need to acquire the backscattered electron image. On the other hand, for the product 38A to be relatively newly manufactured, it needs to acquire the backscattered electron image. When manufacturing the product 38A and the product 38B at a time, by performing the selective scan illustrated in FIG. 12, the throughput can be improved as compared with the case of using only the specific scan illustrated in FIG. 5.

Which layer among all the layers is to be subjected to the selective scan or the specific scan may be set by the PC 104 on the basis of the product information, or may be arbitrarily set by the user.

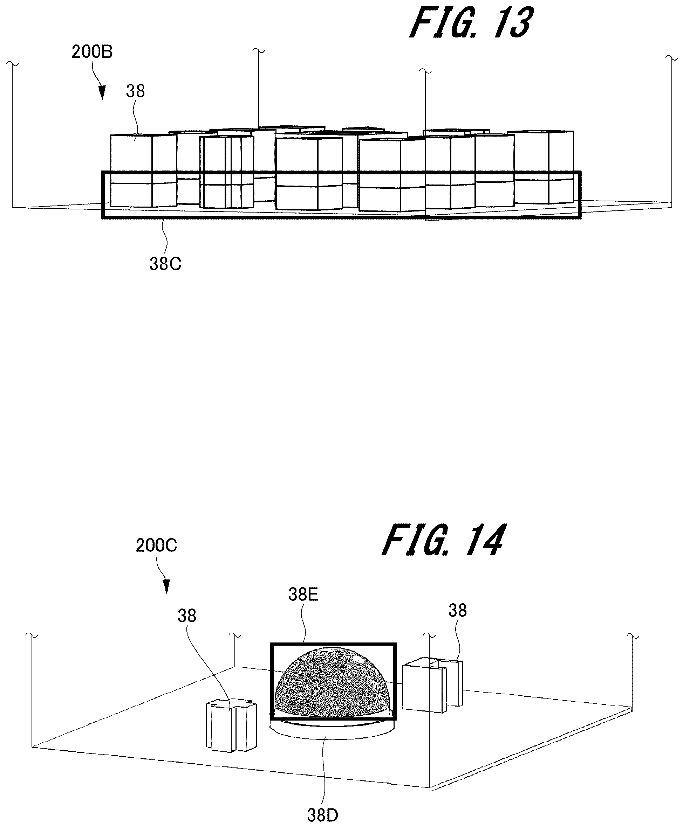

FIG. 13 is a diagram illustrating still another example of build data 200B of the product 38 manufactured by the three-dimensional PBF-AM apparatus 1 described above.

As in the build data 200B illustrated in FIG. 13, a support portion 38C in contact with the build plate 22 is created at the lower portion of the product 38. Furthermore, when setting the irradiation range of the electron beam 15, the PC 104 does not perform the process of acquiring the backscattered electron image (BSE image) in the processes of step S9 and step S17 described above in a layer in which the support portion 38C is built. That is, in the layer in which the support portion 38C is built, the irradiation range is not set.

The purpose of acquiring the backscattered electron image (BSE image) is basically to check the degree of melting of the product 38. For this reason, there is almost no advantage of acquiring the backscattered electron image of the support portion 38C unless there is a special reason. Therefore, as described above, in the layer in which the support portion 38C is built, the process of acquiring the backscattered electron image (BSE image) is not performed, so that the throughput of the manufacturing process in the three-dimensional PBF-AM apparatus 1 can be shortened.

Whether or not to perform the process of acquiring the backscattered electron image (BSE image) in the layer in which the support portion 38C is built may be determined by the PC 104, or may be determined by the user.

FIG. 14 is a diagram illustrating yet another example of build data 200C of the product 38 manufactured by the three-dimensional PBF-AM apparatus 1 described above.

In the build data 200C illustrated in FIG. 14, there are products 38 and 38D of normal size and a product 38E having a very small melting area. Hereinafter, the product 38E is referred to as a minimum area.

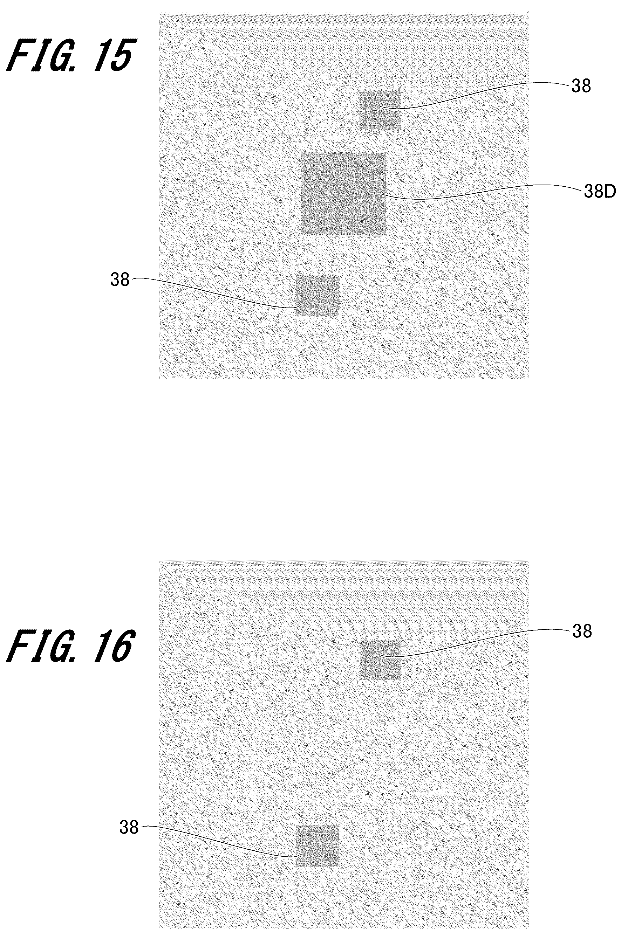

FIGS. 15 and 16 show images illustrating the irradiation range of the electron beam 15 in the backscattered electron image acquisition process when the build data 200C illustrated in FIG. 14 is built.

When setting the irradiation range of the electron beam 15, in a case where the sizes of all the products exceed a threshold in predetermined layers when manufacturing the products 38 and 38D, the PC 104 sets the products 38 and 38D and the vicinity of the products 38 and 38D as the irradiation range, as illustrated in FIG. 15. On the other hand, in the product 38E with a size equal to or smaller than the threshold, that is, in the layer in which the minimum area is present, the minimum area is not set as the irradiation range as illustrated in FIG. 16. The product 38 whose size exceeds the threshold and the vicinity of the product 38 are set as the irradiation range.

As described above, the purpose of acquiring the backscattered electron image (BSE image) is basically to check the degree of melting of the product 38. In the case of the minimum area whose size is equal to or smaller than the threshold, the melt area is small, and thus the probability of occurrence of defects due to poor melting is very small. For this reason, there is almost no advantage of acquiring the backscattered electron image of the minimum area unless there is a special reason. Therefore, the minimum area is excluded from the irradiation range of the electron beam 15. As a result, the process of acquiring the backscattered electron image (BSE image) of the minimum area is not performed, so that the throughput of the manufacturing process in the three-dimensional PBF-AM apparatus 1 can be shortened.

The threshold for determining the minimum area may be set by the PC 104 on the basis of the product information, or may be arbitrarily set by the user.

The present invention is not limited to the embodiments described above and illustrated in the drawings, and various modifications can be made without departing from the scope of the invention defined by the claims.

In addition, the irradiation range of the electron beam 15 at the time of acquiring backscattered electrons may be set by the PC 104 as a control unit, or may be set by the user, and the set irradiation range may be input to the PC 104 or the storage unit 105 via an input unit connected to the PC 104 and the storage unit 105.

For example, the above embodiment example has described an example in which the metal powder such as titanium, aluminum, or iron is applied as a powder material, but the present invention is not limited to this, and a resin or the like is used as the powder material. In addition, the example in which the beam irradiation device that irradiates electron beams is applied as the irradiation device has been described, but it is not limited thereto. A laser irradiation device that irradiates a laser as a primary ray may be applied as the irradiation device.

In addition, some or all of the components, functions, processing units, and the like, which have been described above, may be implemented with hardware, for example, by designing with an integrated circuit. Further, the components, functions, and the like, which have been described above, may be implemented with software by a processor interpreting and executing a program for executing each function. Information such as a program, a table, and a file for implementing each function can be stored in a recording device such as a memory, a hard disk, and a solid state drive (SSD), or a recording medium such as an IC card, an SD card, and a DVD.

Although words such as "parallel" and "orthogonal" have been used in the present specification, these words do not mean only strict "parallel" and "orthogonal", but include states of "substantially parallel" and "substantially orthogonal" that include "parallel" and "orthogonal", and fall within a range in which functions can be achieved.

### Reference Signs List

1 Three-dimensional PBF-AM apparatus
2 Beam irradiation device
3 Vacuum chamber
15 Electron beam
16 Powder supply device
16a Hopper
16b Powder dropping device
16c Squeegee
16d Blade
18 Build table
20 Build box
21 Collecting box
22 Build plate
24 Inner base
26 Plate moving device
32 Powder material
32a Build surface
32aA, 32aB Selected area
38, 38A, 38B, 38D, 38E Product
38C Support portion
42 Camera
44 Shutter
46 Detection unit
101 Polarization amplifier control circuit
102 Analog-digital conversion circuit (ADC)
103 Preamplifier (Pre-AMP)
104 Personal computer (PC, control unit)
105 Storage unit
200, 200A, 200B, 200C Build data
T1, T2 Margin

## Claims

1. A three-dimensional powder bed fusion additive manufacturing (PBF-AM) apparatus (1) that manufactures a product (38, 38A, 38B, 38D, 38E), the apparatus (1) comprising:
a build plate (22);
a powder supply device (16) configured to supply a powder material (32) to the build plate (22) to form a powder layer;
an irradiation device (2) configured to irradiate the powder layer with a primary ray;
a detection unit (46) configured to detect electrons generated when the powder material (32) is irradiated with the primary ray; and
a control unit (104) configured to control the irradiation device (2), wherein
when acquiring the electrons, the control unit (104) controls the irradiation device (2) in a manner that only a predetermined irradiation range in the powder layer is irradiated with the primary ray.

2. The three-dimensional PBF-AM apparatus (1) according to claim 1, wherein
the irradiation range is set to a predetermined length range from the product (38, 38A, 38B, 38D, 38E) and an outer edge of the product (38, 38A, 38B, 38D, 38E).

3. The three-dimensional PBF-AM apparatus (1) according to claim 2, further comprising a storage unit (105) configured to store build data (200, 200A, 200B, 200C) for manufacturing the product (38, 38A, 38B, 38D, 38E), wherein
the control unit (104) sets the irradiation range when the electrons are acquired based on the build data (200, 200A, 200B, 200C).

4. The three-dimensional PBF-AM apparatus (1) according to claim 3, wherein
the control unit (104) determines whether the product (38, 38A, 38B, 38D, 38E) is a known product that has already been manufactured several times or a product to be newly manufactured based on the build data (200, 200A, 200B, 200C), and sets the irradiation range when the electrons are acquired.

5. The three-dimensional PBF-AM apparatus (1) according to claim 3, wherein
when determining, based on the build data (200, 200A, 200B, 200C), that the product (38, 38A, 38B, 38D, 38E) is a product with a size equal to or smaller than a threshold, the control unit (104) excludes the product (38, 38A, 38B, 38D, 38E) from the irradiation range when the electrons are acquired.

6. The three-dimensional PBF-AM apparatus (1) according to claim 1, wherein
when acquiring the electrons, the control unit (104) controls the irradiation device (2) in a manner that in a predetermined layer among all layers in which the product (38, 38A, 38B, 38D, 38E) is manufactured, an entire meltable area is irradiated with the primary ray, and in another layer among all layers in which the product (38, 38A, 38B, 38D, 38E) is manufactured, only a predetermined irradiation range is irradiated with the primary ray.

7. The three-dimensional PBF-AM apparatus (1) according to claim 1, wherein
in a predetermined layer among all layers in which the product (38, 38A, 38B, 38D, 38E) is manufactured, the primary ray is not irradiated, and the control unit (104) does not perform a process of acquiring the electrons.

8. A method of controlling a three-dimensional PBF-AM apparatus (1) comprising a build plate (22),
a powder supply device (16) configured to supply a powder material (32) to the build plate (22) to form a powder layer,
an irradiation device (2) configured to irradiate the powder layer with a primary ray,
a detection unit (46) configured to detect electrons generated when the powder material (32) is irradiated with the primary ray, and a control unit (104) configured to control the irradiation device (2), the method comprising causing the control unit (104) to, when acquiring the electrons, control the irradiation device (2) in a manner that only a predetermined irradiation range in the powder layer is irradiated with the primary ray.
